(19) **Europäisches Patentamt / European Patent Office / Office européen des brevets**

(11) **EP 4 113 254 A1**

(12) **EUROPEAN PATENT APPLICATION**
published in accordance with Art. 153(4) EPC

(43) Date of publication:
04.01.2023 Bulletin 2023/01

(21) Application number: 21757597.6

(22) Date of filing: 01.02.2021

(51) International Patent Classification (IPC):
*G06F 3/01* (2006.01)        *G06T 17/00* (2006.01)
*G10K 11/34* (2006.01)

(86) International application number:
PCT/ES2021/070075

(87) International publication number:
WO 2021/165555 (26.08.2021 Gazette 2021/34)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 21.02.2020 ES 202030150

(71) Applicant: **Universidad Rey Juan Carlos
28933 Mostoles (Madrid) (ES)**

(72) Inventors:
• **BARREIRO, Héctor**
  **28933 Móstoles (ES)**
• **SINCLAIR, Stephen**
  **28933 Móstoles (ES)**
• **OTADUY TRISTÁN, Miguel Ángel**
  **28933 Móstoles (ES)**

(74) Representative: **Clarke Modet & Co.
C/ Suero de Quiñones 34-36
28002 Madrid (ES)**

(54) **SYSTEM AND METHOD FOR REPRESENTING THE TACTILE INTERACTION EMPLOYED BY AN ARRAY OF ULTRASOUND TRANSDUCERS**

(57)     System and method for rendering tactile interaction using an ultrasound transducer array. The method (100) comprises receiving (110) a target field (102); computing (120) one or more paths (514) of pressure focal points of varying intensity such that the difference between a result field (516) produced by the one or more paths of pressure focal points and the target field (102) is minimized; and controlling (130) an ultrasound transducer array (620) in spatiotemporal modulation mode to simultaneously render the one or more computed paths (514) of pressure focal points. The invention accurately represents dynamic interactions produced in a virtual environment with a varying pressure or force field.

100

TARGET FIELD — 102

RECEIVE TARGET FIELD — 110

COMPUTE PATHS OF PRESSURE FOCAL POINTS OF VARYING INTENSITY TO MINIMIZE DIFFERENCE WITH TARGET FIELD — 120

CONTROL ULTRASOUND TRANSDUCER ARRAY IN STM MODE TO SIMULTANEOUSLY RENDER THE COMPUTED PATHS OF PRESSURE FOCAL POINTS — 130

Fig. 1

## Description

### *Field of the Invention*

The present invention is comprised within the field of system and methods for rendering tactile interactions using ultrasound transducer arrays.

### *Background of the Invention*

Ultrasound haptics produces direct touch sensations on the skin in mid-air (i.e., without the need to hold or wear a haptic device), employing an array of ultrasound transducers as actuators which generate high-frequency pressure waves in the space around the device. Ultrasound phased arrays achieve mid-air stimulation through a phenomenon known as acoustic radiation pressure. Multiple ultrasound transducers, producing an ultrasound wave of the same frequency, are modulated in phase to achieve maximal combined pressure intensity at a certain location in space, known as a focal point. The focus of the ultrasound wave is determined by its wavelength (e.g., 8.5 mm for 40 kHz ultrasound).

By modulating the activation of the transducers it is therefore possible to aggregate the pressure waves at specific points in space, and thus create pressure focal points. Pressure reaches perceivable values at such focal points, and produces a touch sensation in mid-air. Pressure waves produce a complex mechanical interaction on skin, both in space and time, and this mechanical interaction produces an activation and aggregation of mechanoreceptor signals to form tactile percepts. Interacting with fluids in a virtual environment is an interesting phenomenon to be rendered using ultrasound haptics, as they can be moved around without constraining the user's motion.

Iwamoto et al. [1] first demonstrated the capability to use phased array ultrasound to focus sufficient acoustic radiation pressure to induce a haptic sensation in a localized area on the hand, exploiting this principle for mid-air haptic stimulation limited to a fixed focal point. Subsequently, Hoshi et al. [2] extended this achievement to vary the focal location over time, generating moving focal points by temporally varying the modulation of the transducers, producing the sensation of a moving stimulus. Although the induced skin deformation is slight, haptic detection is ensured by modulating the intensity of the field at a frequency to which the skin's mechanoreceptors, principally the Pacinian corpuscles, are sensitive, approximately 150 to 250 Hz. Considering the focal point location as stable relative to this frequency range, this method later became known as amplitude modulation (AM).

These early works used a precomputed time-varying solution for ultrasound phases given a desired spatial amplitude distribution. Because these phases must be determined by means of a non-linear quadratic optimization procedure, the calculations were not amenable to real-time control. Long et al. [3] designed an efficient solution that takes advantage of the linearity of the complex-valued eigenproblem associated with the desired focal point intensities.

Korres and Eid [4] pointed out that the efficiency of this solution admits a different display method, in which focal point amplitudes are relatively stable but their location is modulated at much higher rates. This was called spatiotemporal modulation (STM) by Kappus and Long [5], and they showed that such paths could produce recognizable tactile shapes. Frier et al. [6] found that in STM there is some optimal focal point speed (between 5 m/s and 8 m/s) to maximize skin sensitivity. Recently, Frier et al. [7] analyzed the combined influence of spatial and temporal sampling in STM.

Therefore, there are currently two main control methods to command ultrasound devices: amplitude modulation (AM) and spatiotemporal modulation (STM). AM controls the position and pressure intensity of focal points to produce pressure distributions on skin, while STM controls paths of focal points to draw shapes on skin. In both cases, the high-level control of focal points is translated into low-level control of transducer activation patterns through well-established optimization methods [2], [3].

By eliminating the need to hold or wear a haptic device, ultrasound haptics allows rendering interactions with virtual environments to achieve a more immersive and scalable virtual touch experience. To render virtual tactile interactions, previous works simply display contact locations at maximum intensity, either through AM or STM, without considering the force distributions produced in the virtual interactions. In [8] a target pressure field is extracted from the interaction of a virtual hand with a dynamic fluid simulation, and then AM commands are optimized to induce a best-matching pressure field on the user.

However, AM suffers some limitations. Firstly, the intensity of focal points modulates a pressure wave that induces a perceivable vibration on skin (typically at 200 Hz). Moreover, STM cover larger skin areas with higher perceived intensity, by leveraging constructive interference of focal point paths with the skin waves they induce. However, all previous works command STM with focal point paths of constant intensity which do not represent a best match for dynamic interactions. No previous method computes STM paths of varying intensity to best match dynamic interactions. Not surprisingly, STM poses a more complex challenge than AM. While AM rendering can be regarded as a quasi-static problem, STM requires the solution to a spatial and temporal problem.

Therefore, there is a need for a method of rendering tactile interaction using an ultrasound transducer array that accurately represents dynamic interactions produced in an environment (virtual or real) with a varying pressure or force field (e.g., interactions with a fluid producing a dynamic pressure field in a virtual environment).

**References**

[1] T. Iwamoto, M. Tatezono, and H. Shinoda, "Non-contact method for producing tactile sensation using airborne ultrasound", in Proceedings of the 6th International Conference on Haptics: Perception, Devices and Scenarios, ser. EuroHaptics '08. Springer-Verlag, 2008, pp. 504-513.

[2] T. Hoshi, M. Takahashi, T. Iwamoto, and H. Shinoda, "Noncontact tactile display based on radiation pressure of airborne ultrasound", IEEE Transactions on Haptics, vol. 3, no. 3, pp. 155-165, 2010.

[3] B. Long, S. A. Seah, T. Carter, and S. Subramanian, "Rendering volumetric haptic shapes in mid-air using ultrasound", ACM Transactions on Graphics (TOG), vol. 33, no. 6, p. 181, 2014.

[4] G. Korres and M. Eid, "Haptogram: Ultrasonic point-cloud tactile stimulation", IEEE Access, vol. 4, pp. 7758-7769, 2016.

[5] B. Kappus and B. Long, "Spatiotemporal modulation for mid-air haptic feedback from an ultrasonic phased array", The Journal of the Acoustical Society of America, vol. 143, no. 3, pp. 1836-1836, 2018.

[6] W. Frier, D. Ablart, J. Chilles, B. Long, M. Giordano, M. Obrist, and S. Subramanian, "Using spatiotemporal modulation to draw tactile patterns in mid-air", in Haptics: Science, Technology, and Applications, D. Prattichizzo, H. Shinoda, H. Z. Tan, E. Ruffaldi, and A. Frisoli, Eds. Springer International Publishing, 2018, pp. 270-281.

[7] W. Frier, D. Pittera, D. Ablart, M. Obrist, and S. Subramanian, "Sampling strategy for ultrasonic mid-air haptics," in CHI Conference on Human Factors in Computing Systems Proceedings. ACM, 2019.

[8] H. Barreiro, S. Sinclair, and M. A. Otaduy, "Ultrasound rendering of tactile interaction with fluids," in 2019 IEEE World Haptics Conference (WHC), 2019, pp. 521-526.

[9] G. A. Croes, "A method for solving traveling-salesman problems," Operations Research, vol. 6, no. 6, pp. 791-812, 1958

*Description of the Invention*

Ultrasound transducer arrays are capable of producing tactile sensations on the hand, promising hands-free haptic interaction for virtual environments. However, controlling such an array with respect to reproducing a desired perceived interaction remains a challenging problem. The present invention performs a dynamic mapping of virtual interactions to existing control methods of ultrasound devices, namely, the modulation of focal point positions and intensities over time, a method known as spatiotemporal modulation (STM).

In particular, the invention presents an optimization approach that takes into account known perceptual parameters and limitations of the STM method. This results in a set of focal point paths optimized to best reconstruct a dynamic target pressure field (or a dynamic target force field). The present invention performs a path routing optimization for STM, the first method that commands ultrasound STM to render the force distribution resulting from a dynamic virtual interaction. A key aspect of the method is to pose STM rendering as a quasi-static problem, using careful approximations to eliminate the temporal variable on each dynamic rendering update. As a result, given a target pressure field, STM rendering is posed as the computation of focal point paths that produce the best-matching quasi-static pressure field. Then, given a target pressure field, an optimization algorithm computes focal point paths. In an embodiment, the optimization algorithm first initializes paths over the target domain to optimize coverage weighted by pressure intensity. Then, on a finer scale, the optimization algorithm refines the paths to maximize the similarity to the target pressure.

The present invention refers to a computer-implemented method of rendering tactile interaction using an ultrasound transducer array. The method comprises receiving a target field, wherein the target field is a force field or a pressure field; computing one or more paths of pressure focal points of varying intensity such that the difference between a result field produced by the one or more paths of pressure focal points and the target field is minimized; and controlling an ultrasound transducer array in spatiotemporal modulation mode to simultaneously render the one or more computed paths of pressure focal points. Therefore, the method determines one or more paths of pressure focal points such that the result field produced by these paths is a best-match to the target field.

In an embodiment, the step of computing one or more paths of pressure focal points comprises obtaining one or more initial paths of pressure focal points and optimizing the one or more initial paths of pressure focal points by minimizing a set of cost terms based on the target field and the result field produced by the one or more paths of pressure focal points.

The initial paths are preferably computed by applying a cluster analysis on the target points to obtain a set of sample points; finding a path with minimum length that traverses all the points in the set; if the path is too long, split it into subsets; repeat the last two steps until all paths satisfy a maximum length constraint.

The optimization is performed by iterating, starting with the one or more initial paths, paths of pressure focal point with the aim of minimizing the set of cost terms.

The set of cost terms are preferably minimized by iterating steps of gradient descent. The set of cost terms may include any of the following cost terms: an intensity cost term to maximize field intensity, a length cost term to comply with a target path length, an intersection cost term to prevent path samples from getting closer to a fall-off distance, a bending cost term to obtain low-curvature paths, or a combination thereof.

In an embodiment, the result field is obtained by applying a spatial smoothing function to the intensity of the focal points. The spatial smoothing function may be defined as:

$$p(\mathbf{x}) = \frac{1}{\gamma} p_i \, \phi(\|\mathbf{x} - \mathbf{x}_i\|)$$

wherein p(x) is the intensity of the result field at position x, $x_i$ is the closest position to x in a path, $p_i$ is the intensity of the target field at position $x_i$, $\phi$ is a Gaussian function and $\gamma$ is a heuristic gain.

The method may comprise projecting the target field onto a plane to obtain a plurality of target points defined by a 2D position and a target value. In this case, the method may further comprise undoing the projection to obtain one or more 3D paths of pressure focal points.

In an embodiment, the method further comprises refining the target field by computing the intersection of the received target field with a surface of a body or a part of a body of a user. The method may also comprise tracking the position of the body or the part of the body of the user.

In an embodiment, the target field may be generated from an interaction of a user with a virtual environment (e.g., a dynamic fluid simulation). The method may further comprise computing an interactive simulation and extracting the target field from the simulation. In another embodiment, the target field is generated from an interaction of a user with a real environment which is located remotely from the user location, such as teleoperation (e.g., remotely controlling a sensorized robotic hand) or telepresence.

In an embodiment, each path of pressure focal points is a 3D curve defining a closed path. The pressure focal points preferably traverse the one or more computed paths at a reference speed comprised between 5 m/s and 8 m/s. Each path of pressure focal points preferably satisfies a maximum path length constraint. The number of computed paths of pressure focal points may be limited to a maximum number of paths (e.g., four paths).

The present invention also refers to a system for rendering tactile interaction using an ultrasound transducer array. The system comprises a data processing device configured to perform the steps of the method.

Another aspect of the present invention refers to a computer program product and/or a computer readable storage medium for rendering tactile interaction using an ultrasound transducer array, comprising computer usable program code for, when executed on a processor, performing the steps of the method.

*Brief Description of the Drawings*

A series of drawings which aid in better understanding the invention and which are expressly related with an embodiment of said invention, presented as a non-limiting example thereof, are very briefly described below.

Figure 1 depicts a flow diagram of a method of rendering tactile interaction using an ultrasound transducer array according to an embodiment of the present invention.

Figure 2 shows the steps of computing paths of pressure focal points according to an embodiment.

Figure 3 shows the steps of computing paths of pressure focal points according to another embodiment.

Figure 4 is a flow diagram for the step of obtaining initial paths of pressure focal points in Figure 2, according to an embodiment.

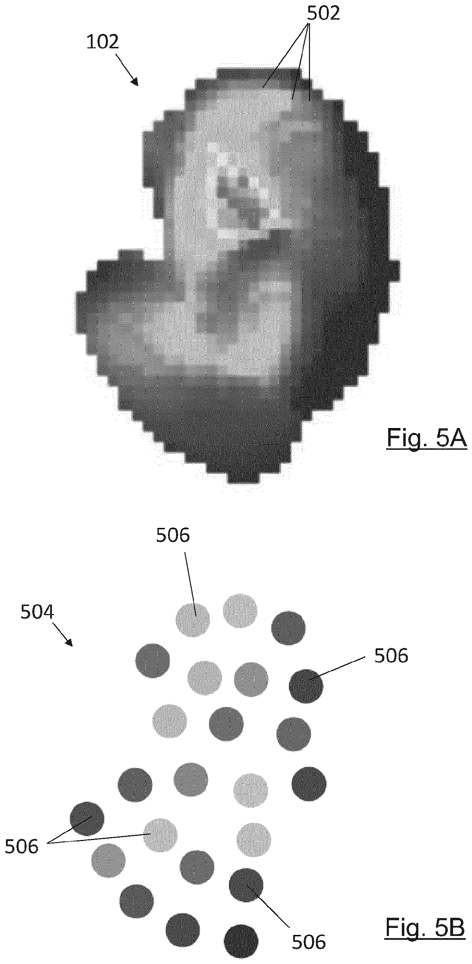

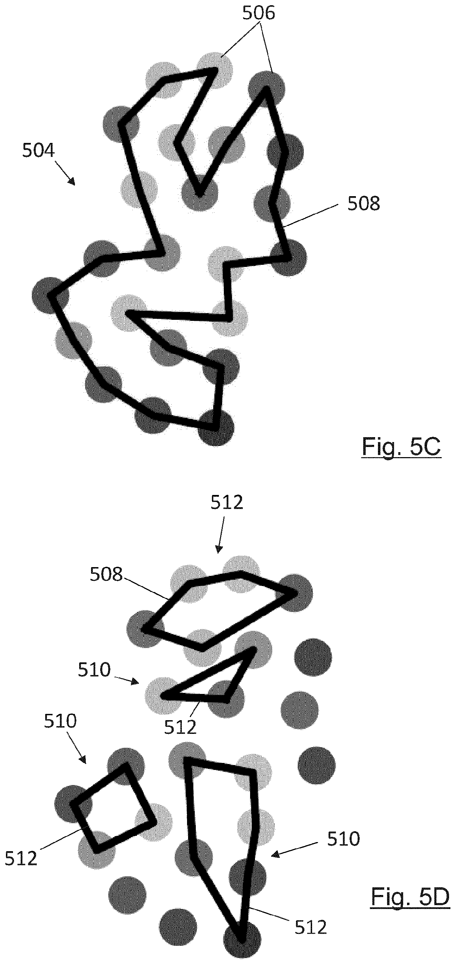

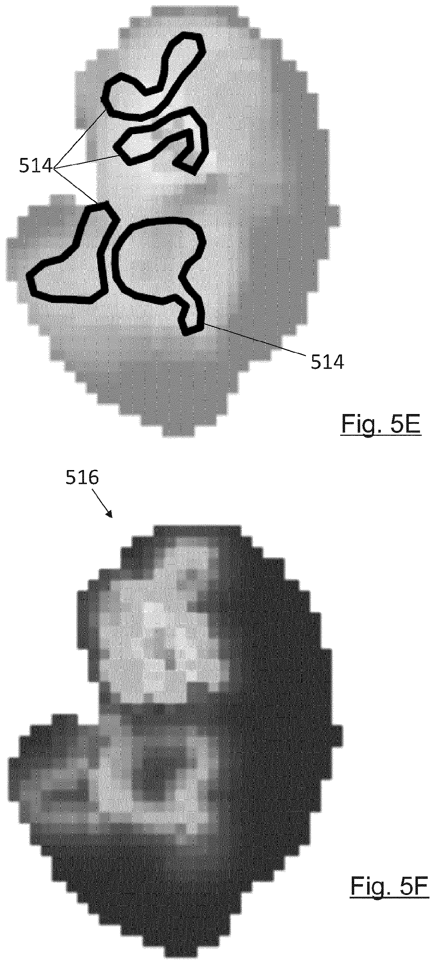

Figure 5A shows the target pressure points of a target field produced on the user's hand and extracted from a fluid simulation. Figures 5B represents the down-sampled pressure points (clusters) of the target field. Figure 5C shows the optimal initial path for the full set of pressure sample points. Figure 5D shows the optimal paths after splitting the set of sample points into subsets to satisfy a maximum path length constraint. Figure 5E depicts the refinement of the paths to maximize pressure intensity. Figure 5F shows the resulting reconstructed pressure field obtained by the optimization algorithm.

Figure 6 depicts a system for rendering tactile interaction using an ultrasound transducer array according to an exemplary embodiment.

Figure 7 depicts the virtual representation of a user's hand interacting with virtual plumes of smoke used in a dynamic fluid simulation within a virtual environment.

Figure 8A depicts the pressure target field produced by the smoke plumes on the surface of the virtual hand. Figure 8B illustrates the reconstructed pressure field produced by STM rendering of dynamically optimized focal point paths according to the present method.

Figures 9 and 10 depict experimental virtual scenarios (with one or four plumes of smoke, respectively) and representative examples of target and reconstructed fields using the STM-based method of the present invention and an AM-based method of the prior art.

*Description* of a *Preferred Embodiment of the Invention*

When using a spatiotemporal modulation (STM) in the activation of the transducers of an ultrasound transducer array, a focal point traverses a path in space. The path $P$ can be formally described as a time-dependent position: $P = x(t) \in \mathbb{R}^3$ . The perceived intensity of a focal point path is maximized under constructive interference between the motion of the focal point and the propagation of skin waves (Frier et al. [6]). This happens for focal point speeds between 5 m/s and 8 m/s; therefore, a reference speed $v$ within said margin is selected for the rendering algorithm. In an embodiment, the selected reference speed v is 7 m/s. Furthermore, to ensure constructive interference on the complete path, the paths are preferably designed as closed paths (i.e., the path $P$ is a closed 3D curve).

Frier et al. [6] assumes that the length of the path is given; therefore, the frequency at which the path is repeated cannot be independently controlled, and depends on the traversal speed and the length of the path. According to preliminary experiments, it has been observed that this is acceptable up to a maximum path length. Beyond that length, the frequency at which the path is repeated is too low, and the stimulus is no longer perceived as continuous. To determine the minimum acceptable frequency (i.e., the maximum acceptable path length), circles of different radii at the reference traversal speed of 7 m/s were rendered, finding that a minimum frequency of 50 Hz (i.e., a maximum path length L = 140 mm) is a safe bound to ensure that the stimulus is perceived as continuous.

Normally, the haptic devices (i.e., the ultrasound transducer arrays) allow STM of multiple focal points simultaneously. Each focal point can traverse a different path, with all focal points traveling at the reference speed v, and all paths satisfying the maximum length constraint L. From preliminary experiments, the number of simultaneous focal points can be limited to a certain number of simultaneous paths (in an embodiment, to four paths). More focal points may reach larger coverage, but at the price of notable degradation of perceived intensity.

In previous works STM is used to render 3D curves, wherein the intensity of the radiation pressure of the moving focal point is kept constant along such curves. In the present invention a temporally and spatially varying pressure field is rendered, wherein the intensity of the radiation pressure along the path adapts locally to the intensity of the pressure field. A path is characterized with a position-dependent pressure intensity $p(x)$.

As a focal point cycles multiple times through the same position $x_i$, the rendered pressure intensity $p(x_i) = p_i$ is the same on all cycles. If the path is repeated frequently enough (e.g., at more than 50 Hz), the rendered radiation pressure produces a persistent tactile perception. This is equivalent to applying a time-invariant pressure at each position along the path, with its effective magnitude a fraction of the rendered pressure. With this assumption, during a time window the effective pressure can be considered to be a spatially varying but temporally invariant field, i.e., a quasi-static pressure field.

The effective pressure of STM rendering is not a simple time-average of the rendered pressure. According to an embodiment, a perceptual heuristic is followed to approximate this magnitude: rendering the same stimuli using amplitude modulation (AM) and STM, and asking subjects to tune the gain $\gamma$ of STM until the peak perceptual intensity is similar. In practice, a gain $\gamma$ = 1.4 is used.

Focal points exhibit a smooth fall-off determined by the wavelength of the ultrasound signal (e.g., 8.6 mm for the 40 kHz of a test ultrasound device). As shown by Hoshi et al. [2], this fall-off can be approximated well by a Gaussian function $\phi$. Based on this finding, together with the heuristic gain $\gamma$, the effective quasi-static pressure field $p(x)$ produced by a focal point path can be approximated as:

$$p(x) = \frac{1}{\gamma} \, p_i \, \phi(\|x - x_i\|) = \frac{1}{\gamma} \, p_i \, e^{-\frac{\|x - x_i\|^2}{2\,\sigma^2}}; \qquad (1)$$

where $x_i$ is the closest position to x in the path. The standard deviation $\sigma$ of the Gaussian fall-off is set to the same value as the wavelength of the ultrasound signal (e.g., 8.6 mm for 40 Khz).

The quasi-static pressure field assumption simplifies the rendering algorithm of the present invention. Given a target pressure field, obtained for instance from a fluid simulation, the focal point paths whose quasi-static pressure field best reconstructs the target field are searched for. To ensure that the quasi-static pressure field assumption is valid, this search preferably fulfills two constraints, namely that each focal point travels at the reference speed $v$ and the length of each path is equal or shorter than the maximum path length L.

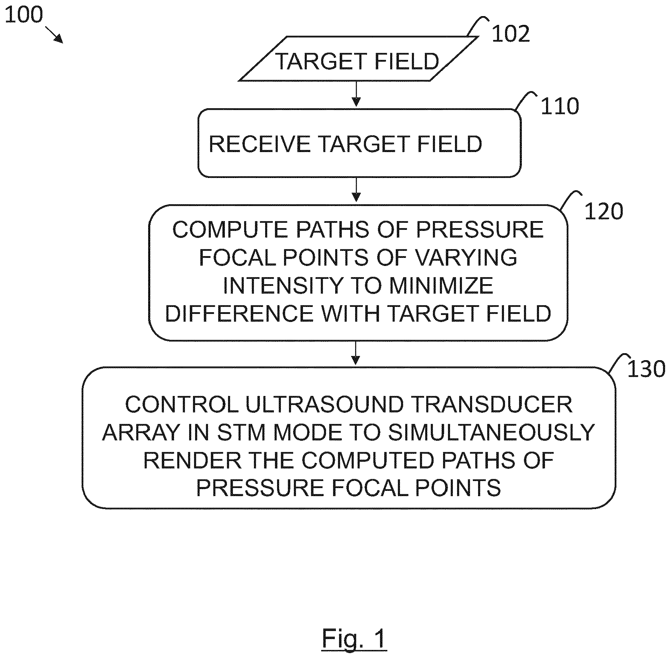

Given a target pressure field or a target force field, focal point paths that produce a best-matching quasi-static pressure field are sought by a path routing optimization algorithm. **Figure 1** depicts, according to an embodiment of the present invention, a flow diagram of a method 100 of rendering tactile interaction using an ultrasound transducer array that implements a path routing optimization algorithm.

The method 100 comprises receiving 110 a target field 102. The target field, which is either a force field or a pressure field, may be computed externally to the optimization method (e.g. by an external simulation). The method also comprises computing 120 one or more paths of pressure focal points of varying intensity such that the difference between a result field produced by the one or more paths of pressure focal points and the target field is minimized. Finally, the method comprises controlling 130 an ultrasound transducer array in spatiotemporal modulation mode to simultaneously render the one or more computed paths of pressure focal points.

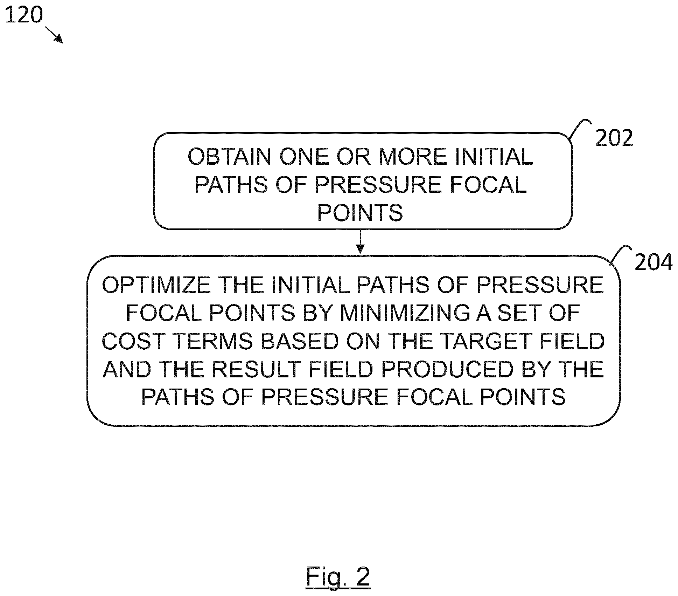

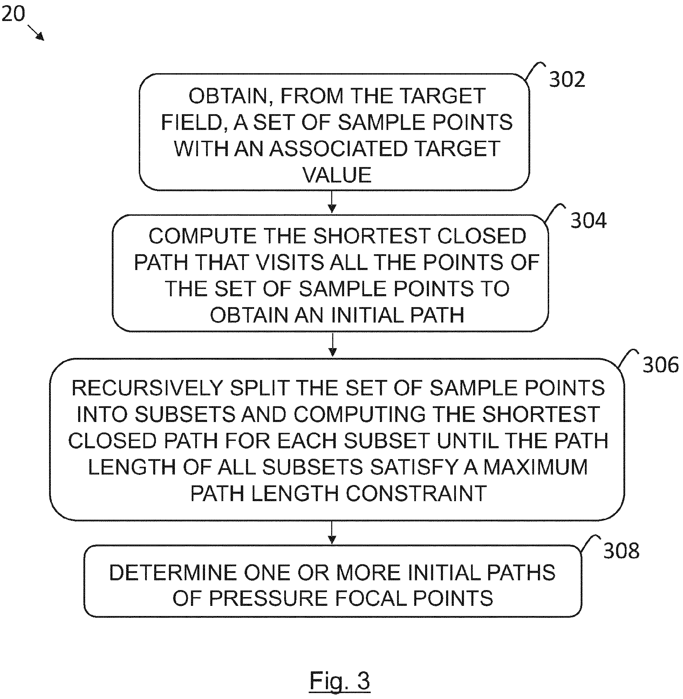

In an embodiment, depicted in **Figure 2,** the step of computing 120 one or more paths of pressure focal points comprises the following steps: obtaining 202 one or more initial paths of pressure focal points; and optimizing 204 the one or more initial paths of pressure focal points by minimizing a set of cost terms based on the target field and the result field produced by the one or more paths of pressure focal points. Alternatively or in addition to the steps of the embodiment of Figure 2, the step of computing 120 one or more paths of pressure focal points may comprise the steps depicted in the flow diagram of **Figure 3.** obtaining 302, from the target field, a set of sample points with an associated target value and determining 308 one or more initial paths of pressure focal points using these sample points. In an embodiment, the set of sample points are obtained by applying a cluster analysis on the target field 102 (in particular, a cluster analysis on a plurality of target points of the target field). The cluster analysis may be a weighted k-means algorithm, wherein the weights considered are the target value of the target points. The one or more initial paths of pressure focal points are determined by computing 304 the shortest closed path that visits all the points of the set of sample points to obtain an initial path and, if the length of the initial path exceeds a maximum path length L, recursively splitting 306 the set of sample points into subsets and computing the shortest closed path for each subset until the path length of all subsets satisfy a maximum path length constraint.

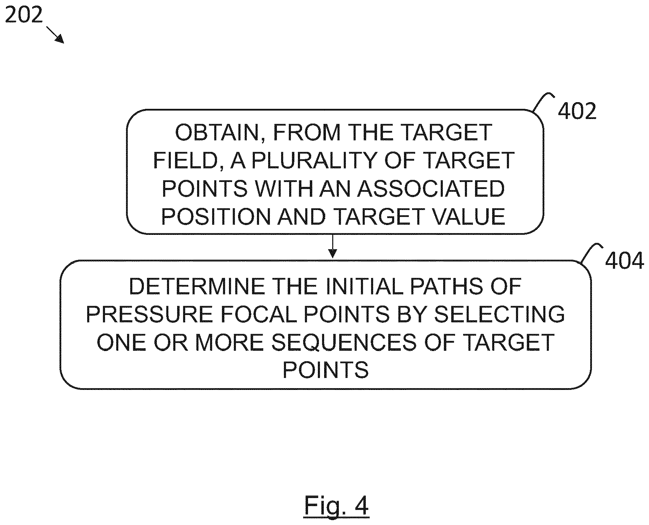

If the embodiments of Figures 2 and 3 are used in combination, the step of obtaining 202 one or more initial paths of pressure focal points of Figure 2 is implemented according to the steps shown in Figure 3. Alternatively, as illustrated in the flow diagram of **Figure 4,** the step in Figure 2 of obtaining 202 one or more initial paths of pressure focal points may comprise obtaining 402, from the target field, a plurality of target points with an associated position and target value; and determining 404 the one or more initial paths of pressure focal points by selecting one or more sequences of target points. This way, the paths may be initialized according to different initialization methods, such as randomly (e.g., Fig. 4), or applying clustering and shortest path calculation (Figure 3). A good initialization makes the optimization algorithm more efficient and/or converging to a better solution. The paths are calculated by optimization, and there are optimization methods that need an initialization and then apply a refinement, and optimization methods performing sampling of paths and selecting the best path.

According to an embodiment, the optimization problem can be solved in two steps, at two different resolutions, searching for paths that maximize coverage and integrated pressure intensity subject to the path length constraint. The first step is a coarse step performing a global search (path initialization), while the second step is a fine step performing a local search (path refinement). In another embodiment, only one of these two steps may be necessary. For example, an embodiment may include using just the first step if the accuracy provided is sufficient, or using only the second step if the computational power allows running the fine step directly.

An interactive simulation may be computed to extract a target pressure field (or a target force field). For instance, an interactive fluid simulation can be used [8], tracking the user's hand and modelling the hand as a moving obstacle in a 3D simulation of a gaseous medium. As described in [8], fluid dynamics can be modelled using incompressible Euler equations discretized on a 3D Eulerian grid, with semi-Lagrangian advection and massively parallel Jacobi relaxation for the pressure solve. The fluid simulation can be executed on a GPU for maximum performance.

The method may comprise refining the target field by computing the intersection of the received target field with a surface of a body or a part of a body of a user. To that end, the method may comprise tracking the position of the body or the part of the body of the user. For example, to define the target pressure field the hand may be voxelized and voxel positions are selected such that they are visible from the side of the domain that corresponds to the location of the ultrasound device. To simplify the path optimization problem a plane may be fit to the voxel positions, so that the voxel positions are projected onto the plane, making path optimization a 2D problem. Formally, the target pressure field can be described by a set of pressure target points T defined by 2D positions $x_i$ and their corresponding target pressure values $p^*(x_i)$:

$$ T = \left\{ \left( x_i \in \mathbb{R}^2, p^*(x_i) \right) \right\}. $$

The first coarse step includes the path initialization. To ensure high computational performance, the initialization of the paths preferably uses only a representative subset of the pressure target points (although the whole set of pressure target points T may also be considered, requiring higher computational resources). **Figures 5A** to **5D** depicts the initialization step according to the embodiment of Figure 3. Starting with a set (or subset) of pressure target points 502 of the target field 102 (e.g., pressure target points on the user's hand extracted from a fluid simulation, as shown in Figure 5A), a set 504 of pressure sample points 506 with an associated target value are obtained 302 (Figure 5B) by applying weighted k-means clustering to the set of pressure target points 502. The clustering analysis produces a down-sampled target pressure field formed by the pressure sample points 506.

Given the set 504 of pressure sample points 506, a set of closed paths that visit all the points is sought, subject to the maximum path length L. The optimal solution to this problem may require an arbitrarily large number of paths; however, as previously noted, it is advisable to limit the number of paths to a certain number of paths (e.g., four paths). Consequently, the resulting paths may fail to visit all the pressure sample points, and an optimal set must be selected.

This problem is solved iteratively. An optimal path (shortest closed path 508, Figure 5C) that visits all the pressure sample points 504 is first computed 304. If the shortest closed path 508 is too long, the set 504 of pressure sample points 506 are split into two subsets and optimal paths (shortest closed paths 508 visiting all the points of the subset 510) are separately computed. The subsets 510 of pressure sample points 506 are recursively split 306 until all shortest closed paths of all the subsets 510 satisfy the maximum length constraint L. If the number of resulting paths is larger than four, the four paths with highest integrated pressure are kept (as in the example of Figure 5D), thereby obtaining the initial paths 512.

The operations to compute an optimal path for a set of points and to split a set of points into further subsets are hereinafter described according to an embodiment, wherein the set of points are either a set 504 or a subset 510 of pressure sample points 506.

Given a set of points, finding the shortest closed path 508 that visits all the points corresponds to the traveling salesman problem. This problem can be solved using the 2-opt algorithm [9], which admits closed paths. The computational cost of 2-opt sets an upper bound on the size of the set 504 of pressure sample points 506. In an embodiment, a maximum of 50 points is set. Therefore, the weighted k-means clustering step is run with 50 or fewer clusters.

To split a set of points, the direction of maximum spread is found, the points along this direction are bounded, and a splitting plane orthogonal to the direction is placed at the midpoint of the two bounds. To find the direction of maximum spread, the covariance matrix of the points, weighted by their pressure value, is computed. The direction of maximum spread corresponds to the eigenvector with highest eigenvalue.

The second fine step includes the path refinement. After initialization, the paths pass through pressure clusters and fulfill the maximum length constraint. However, due to their coarse sampling, the initial paths are not optimally aligned with pressure peaks and ridges. Path refinement is executed at a higher resolution, by up-sampling each path to N points. In an embodiment, N is set to 20, which sets points 7 mm apart from each other, i.e., the distance traveled by a focal point in 1 ms.

During refinement, the goal is to maximize pressure intensity by upsampling each path and moving path samples locally toward locations with higher pressure, while ensuring that paths preserve the following properties: (i) they satisfy the maximum length constraint; (ii) to reach maximum coverage, they do not (self-)intersect; and (iii) they do not bend at sharp angles, as the design decisions of the algorithm stem from perceptual observations on smooth paths, and paths with sharp corners reach smaller coverage. To implement refinement, the goal and the properties are formulated as cost terms of an objective function, and a minimization algorithm is executed.

$$P = \{x_i\} = \arg\min_{\{x_i\}} c_p + c_l + c_i + c_b$$

Given paths with samples $\{x_i \in \mathbb{R}^2\}$, we formulate a pressure intensity cost term as:

$$c_p = -\sum_i p^*(x_i) \qquad (2)$$

The pressure intensity cost term ($c_p$) is minimized as the path samples $x_i$ (i.e., points forming or defining the path) move to locations with higher pressure.

With a target path length L, and N samples per path, the target length is obtained if the length of each path segment is L/N. Then, a length cost term is formulated as:

$$c_l = \sum_i \left( \|x_{i+1} - x_i\| - \frac{L}{N} \right)^2 ; \qquad (3)$$

where $x_i$ and $x_{i+1}$ are two consecutive path samples.

If two paths or two portions of a path get closer than the fall-off distance of focal points, $\sigma$, they stimulate overlapping skin areas. The result can be considered inefficient, as the covered skin area is larger if the paths move away. A (self-)intersection cost term that prevents path samples from getting too close is formulated as:

$$c_i = \sum_{i,j} \max(\sigma - \|x_j - x_i\|, 0)^2 ; \qquad (4)$$

where $x_i$ and $x_j$ are two non-consecutive path samples.

Finally, to favor low-curvature paths, a bending cost term is formulated as:

$$c_b = \sum_i \arctan^2 \frac{(x_{i+1} - x_i) \times (x_i - x_{i-1})}{(x_{i+1} - x_i)^T (x_i - x_{i-1})} ; \qquad (5)$$

where $x_{i-1}$, $x_i$ and $x_{i+1}$ are three consecutive path samples.

In an embodiment, the paths are optimized by iterating steps of gradient descent of the four cost terms (although fewer cost terms or even additional cost terms may also be considered). For the pressure intensity term, a 2D grid is set with the pressure target values $p^*(x_i)$, and bicubic interpolation is used to evaluate the pressure at sub-grid resolution and to compute robust gradients. Furthermore, a line search is applied to ensure that the step along the gradient reduces the cost. **Figure 5E** shows an example of the computed paths 514 after refinement.

To account for the effective magnitude of the pressure field, a heuristic gain $\gamma$, as previously explained in equation (1), is preferably incorporated. The rendered pressure of a point on a path is set as $p_i = \gamma\, p^*(x_i)$, based on the target pressure field $p^*$. **Figure 5F** shows the reconstructed pressure field (result field 516) according to the quasi-static pressure model previously discussed in equation (1).

Once the 2D paths 514 are fully computed, they are lifted back to 3D for STM rendering on the ultrasound transducer array. This is achieved by undoing the projection of the hand voxels.

Each path is 140 mm long and is traversed in 20 ms at 7 m/s. The STM rendering API of an ultrasound transducer array updates every 1 ms a burst of X consecutive focal point positions (e.g., X being 40 in the Ultrahaptics STRATOS Explore USX). Therefore, each path is linearly up-sampled to 800 points spaced 0.175 mm. These points are fed in groups of 40 points to the STM rendering API of the ultrasound transducer array.

In accordance with a further aspect of the present invention there is provided a system for rendering tactile interaction using an ultrasound transducer array. The system comprises a data processing device configured to receive a target field (either a force field or a pressure field); compute one or more paths of pressure focal points of varying intensity such that the difference between a result field produced by the one or more paths of pressure focal points and the target field is minimized; and control an ultrasound transducer array in spatiotemporal modulation mode to simultaneously render the one or more computed one or more paths of pressure focal points (for instance, by computing spatiotemporal modulation commands corresponding to the 3D focal point paths and sending the commands to an ultrasound transducer array). The data processing device may be configured to implement the method as previously defined in any of the different embodiments.

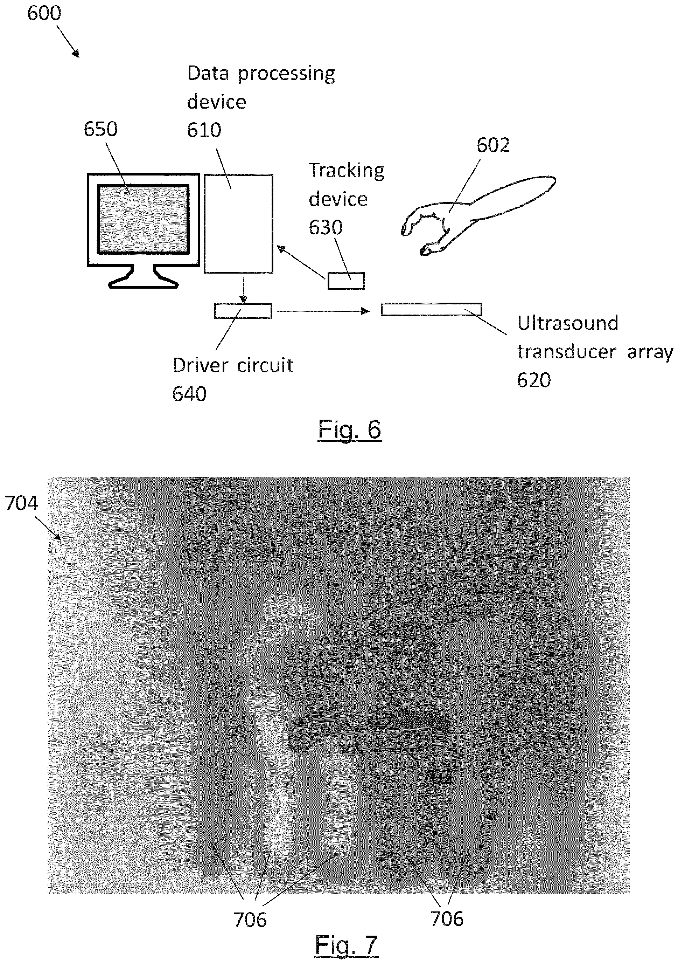

**Figure 6** depicts a system 600 according to an exemplary embodiment. The system 600 comprises a data processing device 610, such as a computer with a processor and a GPU. The data processing device 610 manages the interaction of a user's hand 602 with gaseous fluid media in a virtual environment using an ultrasound transducer array 620. A tracking device 630 is configured to track the position of the body or a part of the body of the user. In the depicted example, the tracking device 630 is a hand-tracking device, such as a Leap Motion controller, that monitors the position of the user's hand 602.

Both the tracking device 630 and the ultrasound transducer array 620 are connected (e.g., via USB) to the computer running a simulation (for instance, a dynamic fluid simulation). The ultrasound transducer array 620 is actuated by a driver circuit 640 controlled by the computer. The system may comprise the driver circuit 640 configured to actuate the ultrasound transducer array 620. The system may also comprise the ultrasound transducer array 620. The system may comprise the tracking device 630 for tracking the position of the body or the part of the body of the user (in this particular case, for tracking the position of the user's hand 602).

The data processing device 610 implements the method as defined in any of the previous figures. The computed phase delays and amplitude values in STM mode are sent from the data processing device 610 to the driver circuit 640. The data processing device 610 may be configured to compute an interactive simulation (e.g., dynamic fluid simulation) and extract the target field 102 from the simulation. In this case, the target field 102 is generated from an interaction of a user's hand 602 with a virtual environment. The computer receives the position of the hand and updates the target field 102 generated on the user's hand 602 based on the hand position in the virtual environment.

The interactions produced during the virtual simulation may be shown on a display device 650, such as a monitor, configured to represent the interactive simulation in a virtual environment 704. **Figure 7** depicts the virtual representation (i.e., virtual hand 702) of the user's hand 602 interacting with virtual plumes of smoke 706 used in the dynamic fluid simulation. The plumes of smoke 706 generate a pressure target field 102 on the virtual hand 702 in the virtual environment 704.

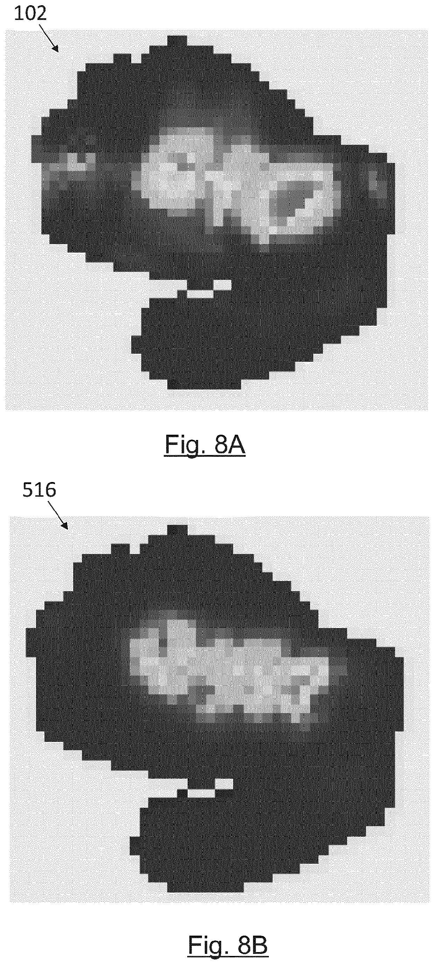

The data processing device 610 computes the target field 102 and the paths 514 of pressure focal points of varying intensity that produce a best-matching pressure field on the user's hand, according to the method described. **Figure 8A** depicts the pressure target field 102 produced on the surface of the hand by the columns of smoke of Figure 7, which sets the target for the optimization algorithm of the method. **Figure 8B** illustrates the reconstructed pressure field, result field 516, produced by STM rendering of dynamically optimized focal point paths.

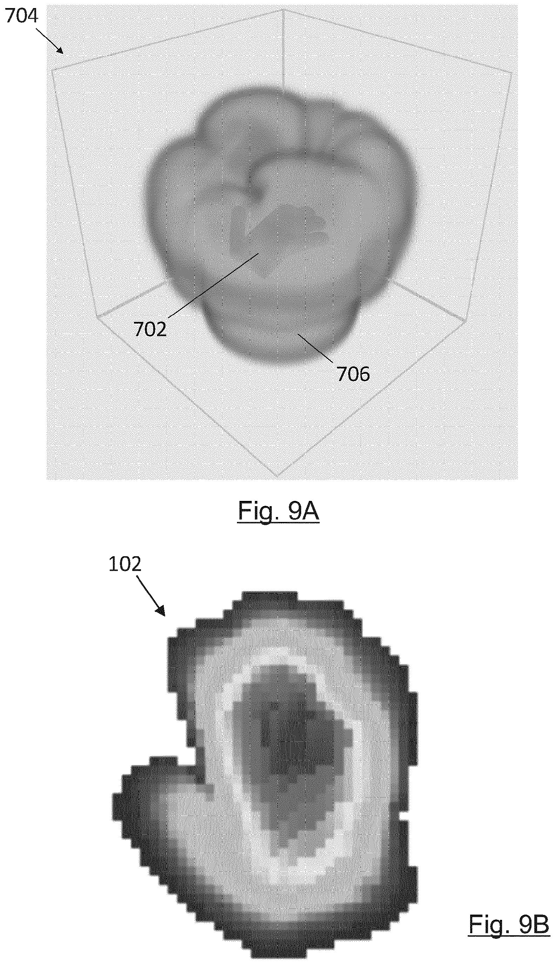

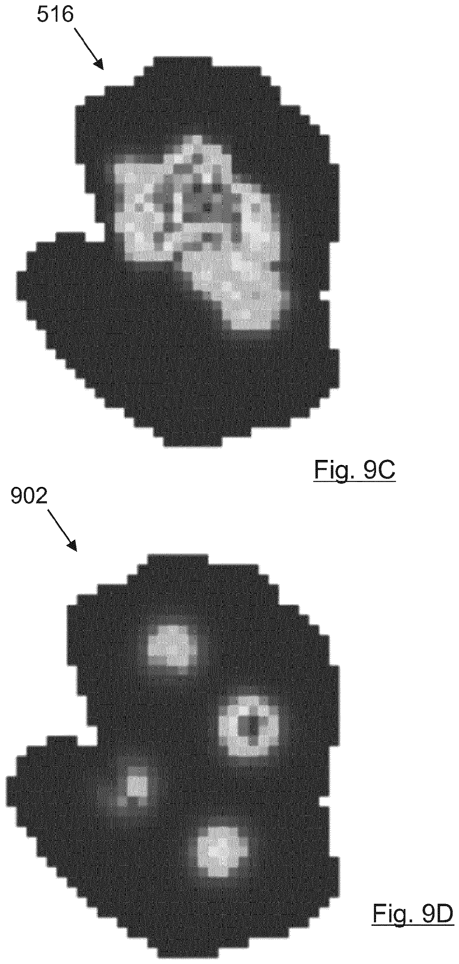

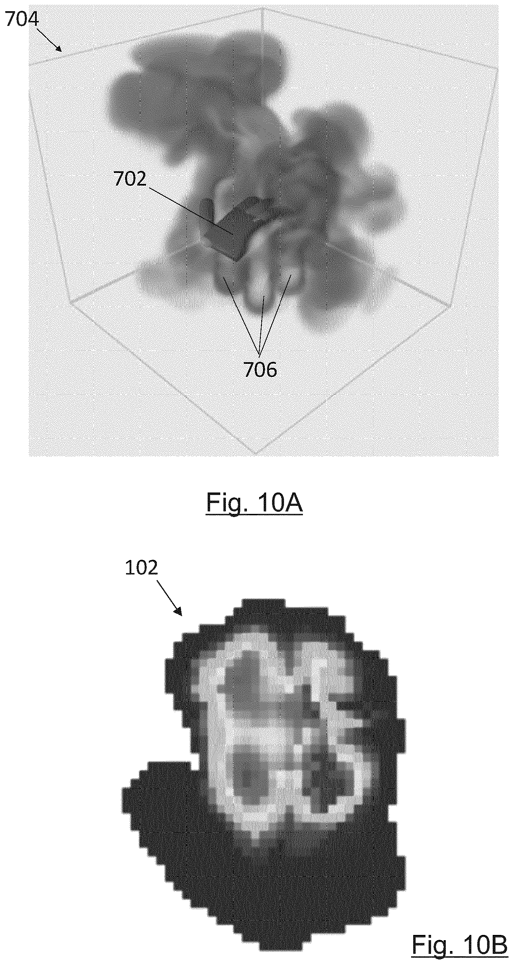

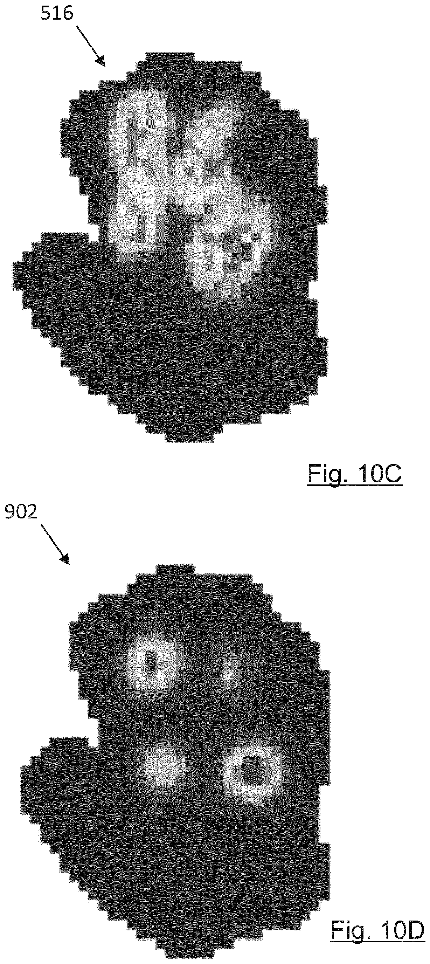

In such interaction, haptic perception is dictated by a spatially and temporally varying pressure field on skin, which is used as target for the optimization algorithm. Figures 9 and 10 compare the reconstruction quality of the present rendering method vs. the rendering method of [8]. **Figures 9A** and **10A** depict a 3D representation of a dynamic fluid simulation with one plume of smoke 706 and four plumes of smoke 706, respectively; **Figures 9B** and **10B** depict the respective target field 102 generated on the virtual hand 702; **Figures 9C** and **10C** show the respective result field 516 rendered by the present method whereas **Figures 9D** and **10D** illustrates the reconstructed field 902 rendered by the AM-based method of [8]. These results show that the method of the present invention succeeds to provide larger and smoother coverage than the AM-based method of [8]. In particular, AM produces ambiguous results when rendering interaction with one wide plume (Figure 9D) or with multiple thin plumes (Figure 10D), while the present STM-based method does not suffer such ambiguity.

**Claims**

1. A method for rendering tactile interaction using an ultrasound transducer array, **characterized in that** the method (100) comprises:

    receiving (110) a target field (102), wherein the target field (102) is a force field or a pressure field;
    computing (120) one or more paths (514) of pressure focal points of varying intensity such that the difference between a result field (516) produced by the one or more paths of pressure focal points and the target field (102) is minimized; and
    controlling (130) an ultrasound transducer array (620) in spatiotemporal modulation mode to simultaneously render the one or more computed paths (514) of pressure focal points.

2. The method of claim 1, wherein the step of computing (120) one or more paths (514) of pressure focal points comprises:

    obtaining (202) one or more initial paths of pressure focal points; and
    optimizing (204) the one or more initial paths of pressure focal points by minimizing a set of cost terms based on the target field (102) and the result field (516) produced by the one or more paths of pressure focal points.

3. The method of claim 2, wherein the set of cost terms is minimized by iterating steps of gradient descent.

4. The method of any of claims 2 to 3, wherein the set of cost terms includes an intensity cost term ($c_p$) to maximize field intensity.

5. The method of any of claims 2 to 4, wherein the set of cost terms includes a length cost term ($c_l$) to comply with a target path length (L).

6. The method of any of claims 2 to 5, wherein the set of cost terms includes an intersection cost term ($c_i$) to prevent path samples from getting closer to a fall-off distance ($\sigma$).

7. The method of any of claims 2 to 6, wherein the set of cost terms includes a bending cost term ($c_b$) to obtain low-curvature paths.

8. The method of any of claims 2 to 7, wherein the step of obtaining (202) one or more initial paths of pressure focal points comprises:

   obtaining (402), from the target field, a plurality of target points (502) with an associated position and target value; and
   determining (404) the one or more initial paths of pressure focal points by selecting one or more sequences of target points (502).

9. The method of any of claims 1 to 7, wherein the step of computing (120) one or more paths of pressure focal points comprises:

   obtaining (302), from the target field, a set (504) of sample points (506) with an associated target value; and
   determining (308) one or more initial paths (512) of pressure focal points by:

   computing (304) the shortest closed path (508) that visits all the points of the set (504) of sample points (506); and
   recursively splitting (306) the set (504) of sample points (506) into subsets (510) and computing the shortest closed path (508) for each subset (510) until the path length satisfy a maximum path length constraint for all the subsets (510).

10. The method of claim 9, wherein the set of sample points are obtained by applying a cluster analysis on a plurality of target points (502) of the target field (102).

11. The method of claim 10, wherein the cluster analysis is a weighted k-means algorithm.

12. The method of any preceding claim, wherein the result field is obtained by applying a spatial smoothing function to the intensity of the focal points.

13. The method of claim 12, wherein the spatial smoothing function is defined as:

$$p(\mathbf{x}) = \frac{1}{\gamma}\, p_i\, \phi(\|\mathbf{x} - \mathbf{x}_i\|)$$

wherein p(x) is the intensity of the result field at position x, $x_i$ is the closest position to x in a path, $p_i$ is the intensity of the target field at position $x_i$, $\phi$ is a Gaussian function and $\gamma$ is an heuristic gain.

14. The method of any preceding claim, further comprising projecting the target field onto a plane to obtain a plurality of target points defined by a 2D position ($x_i$) and a target value.

15. The method of claim 14, further comprising undoing the projection to obtain the one or more paths of pressure focal points.

16. The method of any preceding claim, further comprising refining the target field by computing the intersection of the received target field with a surface of a body or a part of a body of a user.

17. The method of claim 16, further comprising tracking the position of the body or the part of the body of the user.

18. The method of any of claims 1 to 17, wherein the target field is generated from an interaction of a user with a virtual environment.

19. The method of any of claims 1 to 17, wherein the target field is generated from an interaction of a user with a real environment remote from the user location.

20. The method of any preceding claim, wherein each path of pressure focal points is a 3D curve defining a closed path.

21. The method of any preceding claim, wherein the pressure focal points traverse the one or more computed paths at a reference speed comprised between 5 m/s and 8 m/s.

22. The method of any preceding claim, wherein each path of pressure focal points satisfies a maximum path length constraint.

23. The method of any preceding claim, wherein the number of computed paths of pressure focal points is limited to a maximum number of paths.

24. The method of any preceding claim, further comprising computing an interactive simulation and extracting the target field from the simulation.

25. A system for rendering tactile interaction using an ultrasound transducer array, **characterized in that** the system (600) comprises a data processing device (610) configured to:

receive (110) a target field (102), wherein the target field (102) is a force field or a pressure field;
compute (120) one or more paths (514) of pressure focal points of varying intensity such that the difference between a result field (516) produced by the one or more paths of pressure focal points and the target field (102) is minimized; and
control (130) an ultrasound transducer array (620) in spatiotemporal modulation mode to simultaneously render the one or more computed paths (514) of pressure focal points.

26. The system of claim 25, further comprising a driver circuit (640) for actuating the ultrasound transducer array (620).

27. The system of claim 26, further comprising the ultrasound transducer array (620).

28. The system of any of claims 25 to 27, further comprising a tracking device (630) for tracking the position of the body or the part of the body of the user.

29. The system of claim 28, wherein the tracking device (630) is a hand-tracking device.

30. The system of any of claims 25 to 29, wherein the target field (102) is generated from an interaction of a user with a virtual environment.

31. The system of any of claims 25 to 30, wherein the data processing device (610) is configured to compute an interactive simulation and extract the target field (102) from the simulation.

32. The system of claim 31, further comprising a display device (650) configured to represent the interactive simulation in a virtual environment (704).

33. A computer program product for rendering tactile interaction using an ultrasound transducer array, **characterized by** comprising computer usable program code for, when executed on a processor, performing the steps of the method defined in any of the claims 1 to 24.

34. A computer readable storage medium comprising instructions to cause a processor to carry out the steps of the method defined in any of the claims 1 to 24.

Fig. 1

120

OBTAIN ONE OR MORE INITIAL PATHS OF PRESSURE FOCAL POINTS — 202

OPTIMIZE THE INITIAL PATHS OF PRESSURE FOCAL POINTS BY MINIMIZING A SET OF COST TERMS BASED ON THE TARGET FIELD AND THE RESULT FIELD PRODUCED BY THE PATHS OF PRESSURE FOCAL POINTS — 204

<u>Fig. 2</u>

20

OBTAIN, FROM THE TARGET FIELD, A SET OF SAMPLE POINTS WITH AN ASSOCIATED TARGET VALUE — 302

COMPUTE THE SHORTEST CLOSED PATH THAT VISITS ALL THE POINTS OF THE SET OF SAMPLE POINTS TO OBTAIN AN INITIAL PATH — 304

RECURSIVELY SPLIT THE SET OF SAMPLE POINTS INTO SUBSETS AND COMPUTING THE SHORTEST CLOSED PATH FOR EACH SUBSET UNTIL THE PATH LENGTH OF ALL SUBSETS SATISFY A MAXIMUM PATH LENGTH CONSTRAINT — 306

DETERMINE ONE OR MORE INITIAL PATHS OF PRESSURE FOCAL POINTS — 308

Fig. 3

202

OBTAIN, FROM THE TARGET
FIELD, A PLURALITY OF TARGET
POINTS WITH AN ASSOCIATED
POSITION AND TARGET VALUE

402

DETERMINE THE INITIAL PATHS OF
PRESSURE FOCAL POINTS BY SELECTING
ONE OR MORE SEQUENCES OF TARGET
POINTS

404

<u>Fig. 4</u>

Fig. 5A

Fig. 5B

EP 4 113 254 A1

Fig. 5C

Fig. 5D

17

514

514

Fig. 5E

516

Fig. 5F

600

650

Data processing
device
610

Tracking
device
630

602

Driver circuit
640

Ultrasound
transducer array
620

Fig. 6

704

702

706

706

Fig. 7

102

Fig. 8A

516

Fig. 8B

704

702

706

Fig. 9A

102

Fig. 9B

516

Fig. 9C

902

Fig. 9D

Fig. 10A

Fig. 10B

516

Fig. 10C

902

Fig. 10D

# INTERNATIONAL SEARCH REPORT

| | |
|---|---|
| International application No. | |
| PCT/ES2021/070075 | |

## A. CLASSIFICATION OF SUBJECT MATTER

**See extra sheet**

According to International Patent Classification (IPC) or to both national classification and IPC

## B. FIELDS SEARCHED

Minimum documentation searched (classification system followed by classification symbols)
G06F, G06T, G10K

Documentation searched other than minimum documentation to the extent that such documents are included in the fields searched

Electronic data base consulted during the international search (name of data base and, where practicable, search terms used)

EPODOC, INVENES, internet

## C. DOCUMENTS CONSIDERED TO BE RELEVANT

| Category* | Citation of document, with indication, where appropriate, of the relevant passages | Relevant to claim No. |
|---|---|---|
| A | WO 2018200424 A1 (ULTRAHAPTICS IP LTD) 01/11/2018, paragraphs 85-95, 160-171 | 1-34 |
| A | CN 105426024 A (UNIV JILIN) 23/03/2016, | 1-34 |
| A | WO 2019031057 A1 (SONY CORP) 14/02/2019, | 1-34 |
| A | FRIER et al. Sampling Strategy for Ultrasonic Mid-Air Haptics. Conference on Human Factors in Computing Systems 2019, 05/2019, Pages 1-11 [on line] [retrieved from the internet on 05/05/2021]. | 1-34 |
| A | HOWARD, et al. Investigating the recognition of local shapes using mid-air ultrasound haptics. IEEE World Haptics Conference, 07/2019, Pages 1-6 [on line] [retrieved from the internet on 05/05/2021]. | 1-34 |
| A | BARREIRO, et al. Ultrasound Rendering of Tactile Interaction with Fluids. 2019 IEEE World Haptics Conference, 09/07/2019, Pages 1-6 [on line][retrieved from the internet on 05/05/2021]. | 1-34 |

☒ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents, such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 05/05/2021 | **(07/05/2021)** |
| Name and mailing address of the ISA/ | Authorized officer |
| | F. Bejarano Durán |
| OFICINA ESPAÑOLA DE PATENTES Y MARCAS Paseo de la Castellana, 75 - 28071 Madrid (España) Facsimile No.: 91 349 53 04 | Telephone No. 91 3495441 |

Form PCT/ISA/210 (second sheet) (January 2015)

## INTERNATIONAL SEARCH REPORT

Information on patent family members

| International application No. |
| --- |
| PCT/ES2021/070075 |

| Patent document cited in the search report | Publication date | Patent family member(s) | Publication date |
| --- | --- | --- | --- |
| WO2018200424 A1 | 01.11.2018 | US2021037332 A1 | 04.02.2021 |
| | | US2019197840 A1 | 27.06.2019 |
| | | US2018310111 A1 | 25.10.2018 |
| | | EP3616033 A1 | 04.03.2020 |
| WO2019031057 A1 | 14.02.2019 | US2020258357 A1 | 13.08.2020 |
| | | DE112018004030T T5 | 28.05.2020 |
| | | CN110998489 A | 10.04.2020 |
| CN105426024 A | 23.03.2016 | CN105426024B B | 27.03.2018 |

Form PCT/ISA/210 (patent family annex) (January 2015)

**INTERNATIONAL SEARCH REPORT**

| International application No. |
|---|
| PCT/ES2021/070075 |

## CLASSIFICATION OF SUBJECT MATTER

*G06F3/01* (2006.01)
*G06T17/00* (2006.01)
*G10K11/34* (2006.01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Non-contact method for producing tactile sensation using airborne ultrasound. **T. IWAMOTO ; M. TATEZONO ; H. SHINODA.** Proceedings of the 6th International Conference on Haptics: Perception, Devices and Scenarios. Springer-Verlag, 2008, 504-513
- **T. HOSHI ; M. TAKAHASHI ; T. IWAMOTO ; H. SHINODA.** Noncontact tactile display based on radiation pressure of airborne ultrasound. *IEEE Transactions on Haptics,* 2010, vol. 3 (3), 155-165
- **B. LONG ; S. A. SEAH ; T. CARTER ; S. SUBRAMANIAN.** Rendering volumetric haptic shapes in mid-air using ultrasound. *ACM Transactions on Graphics (TOG),* 2014, vol. 33 (6), 181
- **G. KORRES ; M. EID.** Haptogram: Ultrasonic point-cloud tactile stimulation. *IEEE Access,* 2016, vol. 4, 7758-7769
- **B. KAPPUS ; B. LONG.** Spatiotemporal modulation for mid-air haptic feedback from an ultrasonic phased array. *The Journal of the Acoustical Society of America,* 2018, vol. 143 (3), 1836-1836

- Using spatiotemporal modulation to draw tactile patterns in mid-air. **W. FRIER ; D. ABLART ; J. CHILLES ; B. LONG ; M. GIORDANO ; M. OBRIST ; S. SUBRAMANIAN.** Haptics: Science, Technology, and Applications. Springer International Publishing, 2018, 270-281
- Sampling strategy for ultrasonic mid-air haptics. **W. FRIER ; D. PITTERA ; D. ABLART ; M. OBRIST ; S. SUBRAMANIAN.** CHI Conference on Human Factors in Computing Systems Proceedings. ACM, 2019
- **H. BARREIRO ; S. SINCLAIR ; M. A. OTADUY.** Ultrasound rendering of tactile interaction with fluids. *2019 IEEE World Haptics Conference (WHC),* 2019, 521-526
- **G. A. CROES.** A method for solving traveling-salesman problems. *Operations Research,* 1958, vol. 6 (6), 791-812